# EUROPEAN PATENT APPLICATION

(11) **EP 2 109 078 A1**
(43) Date of publication of application: **14.10.2009**
(21) Application number: 09250514.8
(22) Date of filing: 26.02.2009
(51) Int. Cl.: G06Q 30/00

(54) **Information processing apparatus and method, program recording medium, recommendation apparatus and method, and information processing system**

(30) Priority: 08.04.2008 JP 2008100236
(71) Applicant: Sony Corporation, Tokyo 108-0075 (JP)
(72) Inventor: Nagano, Kae, Tokyo 108-0075 (JP); Kobayashi, Yoshiyuki, Tokyo 108-0075 (JP)
(74) Representative: Robinson, Nigel Alexander Julian

(57) **Abstract**

An information processing apparatus is provided whereby digital content can be viewed more comfortably and conveniently. A category information transmitter transmits, to a server, category information expressing one or more content categories associated with a recording medium loaded into the apparatus. A recommendation list presentation unit then receives and presents a recommendation list showing a server-generated list of content associated with the category information. The user selects content from the recommendation list. A selection information transmitter accepts the selection of content and then transmits, to the server, information specifying the selected content.

## Description

The present invention relates to an information processing apparatus and method, a program, a recording medium, a recommendation apparatus and method, and an information processing system. More particularly, the present invention relates to an information processing apparatus and method, a program, a recording medium, a recommendation apparatus and method, and an information processing system whereby content can be viewed more comfortably and conveniently.

In the video and DVD rental business, there exist some companies who provide services for renting titles via a network such as the Internet. Such services may involve, for example, checking a list of desired rental content that has been transmitted via a network from a subscribing user, and then shipping DVDs containing that content to the respective user.

In addition, in recent years it has become possible to view movies and other content by means of streaming services over a network such as the Internet. Such streaming services may involve, for example, transmitting desired content data from a server to a subscribing user's terminal, thereby enabling the user to view desired content at the time of his or her choosing.

Furthermore, in recent years, web services that introduce a given user to other users over the Internet or other network have also been operating. Such services may involve, for example, using collaborative filtering or similar techniques to analyze a user's content history viewed using a website, and then introducing that user to other users having similar preferences.

For example, technology has been proposed wherein correlations in program preferences are calculated for a given user with respect to other users using the service, the above being calculated on the basis of ratings data that acts an index indicating how much a user liked certain programs. In addition, predicted values for individual user ratings are calculated with respect to future broadcast programs, the above being calculated on the basis of user scheduling information. The above calculated data is then used to create a list of programs recommended to the user (see Japanese Unexamined Patent Application Publication No. 2003-114903, for example).

In addition, technology has also been proposed wherein, for example, appropriate user preference information is used to generate a vector in order to recommend content. By means of such technology, it becomes possible to recommend content that is suited to the user's preferences.

However, when viewing content by means of streaming services, buffering might take a long time due to network congestion or similar factors, and playback of content footage may be interrupted. For this reason, many users still desire to view content using a recording medium such as a DVD.

In addition, a user subscribing to streaming services may be one member of a family (the father, for example), and it is thus conceivable that in many cases a child may use his or her father's account to view streaming content. Meanwhile, when recommending content to the user, the user's viewing history is primarily referenced in order to generate a preference vector or similar data. Thus, in the case stated above, a preference vector is generated by referencing the viewing history of the entire family, and as a result, suitable content might not be recommended.

Furthermore, when searching for other users having similar preferences, the use of collaborative filtering involves processing complex algorithms.

Being devised in light of the foregoing circumstances, the present invention enables content to be viewed more comfortably and conveniently.

It should also be appreciated that viewing content is herein taken to encompass listening to audio content as well as watching video content, either individually or in tandem.

An information processing apparatus in accordance with a first embodiment of the present invention is provided with: category information transmitting means for transmitting, to a server, category information expressing one or more content categories associated with a recording medium loaded into the apparatus; recommendation list presenting means for receiving and presenting a recommendation list showing a server-generated list of content associated with the category information; and selection information transmitting means for accepting the selection of content included in the recommendation list, and then transmitting, to the server, information specifying the selected content.

The category information transmitting means may also be configured to additionally transmit a user ID specifying the user together with the category information.

Given a content viewing history accumulated on the server, the recommendation list presenting means may also be configured to present a recommendation list that has been generated on the basis of the viewing history for content viewed on another information processing apparatus into which a recording medium has been loaded, wherein the category information of the recording medium is similar or identical to the category information transmitted by category information transmitting means.

The information processing apparatus may be configured to be furthermore provided with downloading means, wherein, in the case where the recording medium is loaded into the apparatus, the downloading means downloads a portion of content data included in a wish list showing a list of content that the user of the recording medium desires to view in the future.

An information processing method in accordance with an embodiment of the present invention includes the steps of: transmitting, to a server, category information expressing one or more content categories associated with a recording medium; receiving and presenting a recommendation list showing a server-generated list of content associated with the category information; and accepting the selection of content included in the recommendation list, and then transmitting, to the server, information specifying the selected content.

A program in accordance with an embodiment of the present invention causes a computer to execute processing that includes the steps of: transmitting, to a server, category information expressing one or more content categories associated with a recording medium; receiving and presenting a recommendation list showing a server-generated list of content associated with the category information; and accepting the selection of content included in the recommendation list, and then transmitting, to the server, information specifying the selected content.

A recording medium in accordance with a second embodiment of the present invention has recorded thereon category information expressing one or more predefined content categories, as well as a program for acquiring a recommendation list of content associated with the category information. The program communicates with a server, causes the category information to be transmitted to the server, receives a recommendation list showing a server-generated list of content associated with the category information, and then causes the recommendation list to be presented. Subsequently, the program accepts the selection of content included in the recommendation list, and then causes information specifying the selected content to be transmitted to the server.

The program may also be configured to cause a user ID specifying the user to be additionally transmitted together with the category information.

Given a content viewing history accumulated on the server, the program may also be configured to cause presentation of a recommendation list that has been generated on the basis of the viewing history for content viewed on another information processing apparatus into which a recording medium has been loaded, wherein the category information of the recording medium is similar or identical to the transmitted category information.

The program may be configured such that, in the case where the recording medium is loaded into an information processing apparatus, the program causes downloading of a portion of content data included in a wish list showing a list of content that the user of the recording medium desires to view in the future.

In the embodiments summarized above, category information expressing one or more content categories associated with a loaded recording medium is transmitted to a server. A recommendation list showing a server-generated list of content associated with the category information is then received and presented. A selection of content included in the recommendation list is then accepted, and information specifying the selected content is transmitted to the server.

A process for manufacturing a recording medium in accordance with a third embodiment of the present invention includes the steps of: generating data containing a program and content; and recording the generated data onto a recording medium in a format that can be played back by an information processing apparatus. The program causes a computer to execute processing that includes the step of causing the information processing apparatus to execute the following processing steps: transmitting, to a server, category information expressing one or more content categories associated with the recording medium; receiving and presenting a recommendation list showing a server-generated list of content associated with the category information; and accepting the selection of content included in the recommendation list, and then transmitting, to the server, information specifying the selected content.

In the process for manufacturing a recording medium in accordance with the third embodiment of the present invention, data containing a program and content is generated, and the generated data is then recorded onto a recording medium in a format that can be played back by an information processing apparatus. The program causes a computer to execute processing that includes the step of causing the information processing apparatus to execute the following processing steps: transmitting, to a server, category information expressing one or more content categories associated with the recording medium; receiving and presenting a recommendation list showing a server-generated list of content associated with the category information; and accepting the selection of content included in the recommendation list, and then transmitting, to the server, information specifying the selected content.

A recommendation apparatus in accordance with a fourth embodiment of the present invention recommends content for viewing by users of information processing apparatuses, and is provided with: storage means for storing viewing histories indicating the content viewed by the users of a plurality of information processing apparatuses, wherein each viewing history is categorized and stored on the basis of a user ID specifying a particular user as well as category information expressing one or more content categories associated with a recording medium loaded into a particular information processing apparatus; specifying means for acquiring a particular user ID and category information transmitted from a particular information processing apparatus, and then specifying the viewing histories of other users stored in the storage means that are associated with the category information; and generating means for generating, on the basis of the viewing histories specified by the specifying means, a recommendation list showing a list of content for viewing.

A recommendation method in accordance with an embodiment of the present invention is a method whereby content is recommended for viewing by users of information processing apparatuses, and includes the steps of: storing, in storage means, viewing histories indicating the content viewed by users of a plurality of information processing apparatuses, wherein each viewing history is categorized and stored on the basis of a user ID specifying a particular user as well as category information expressing one or more content categories associated with a recording medium loaded into a particular information processing apparatus; acquiring a particular user ID and category information transmitted from a particular information processing apparatus, and then specifying the viewing histories of other users stored in the storage means that are associated with the category information; and generating, on the basis of the viewing histories specified by the specifying means, a recommendation list showing a list of content for viewing.

In the recommendation apparatus in accordance with the fourth embodiment of the present invention, viewing histories indicating the content viewed by the users of a plurality of information processing apparatuses are categorized and stored in storage means on the basis of respective user IDs specifying particular users as well as respective category information expressing one or more content categories associated with a recording medium loaded into a particular information processing apparatus. A user ID and category information transmitted from a particular information processing apparatus is then acquired, and viewing histories associated with the category information are then specified, the viewing histories being those of other users and stored in the storage means. Subsequently, on the basis of the specified viewing histories, a recommendation list is generated showing a list of content for viewing.

An information processing system in accordance with a fifth embodiment of the present invention includes an information processing apparatus and a recommendation apparatus. The information processing apparatus is provided with: category information transmitting means for transmitting, to the recommendation apparatus, category information expressing one or more content categories associated with a recording medium loaded into the information processing apparatus; recommendation list presenting means for receiving and presenting a recommendation list generated by the recommendation apparatus and showing a list of content associated with the category information; and selection information transmitting means for accepting the selection of content included in the recommendation list, and then transmitting, to the recommendation apparatus, information specifying the selected content. The recommendation apparatus is provided with: storage means for storing viewing histories indicating the content viewed by the users of a plurality of information processing apparatuses, wherein each viewing history is categorized and stored on the basis of a user ID specifying a particular user as well as category information expressing one or more content categories associated with a recording medium loaded into a particular information processing apparatus; specifying means for acquiring a particular user ID and category information transmitted from a particular information processing apparatus, and then specifying the viewing histories of other users stored in the storage means that are associated with the category information; and generating means for generating, on the basis of the viewing histories specified by the specifying means, a recommendation list showing a list of content for viewing.

In the information processing system in accordance with the fifth embodiment of the present invention, category information expressing one or more content categories associated with a recording medium loaded into an information processing apparatus is transmitted by the information processing apparatus to a recommendation apparatus. The information processing apparatus then receives and displays a recommendation list generated by the recommendation apparatus and showing a list of content associated with the category information. Subsequently, the information processing apparatus accepts the selection of content included in the recommendation list and transmits information specifying the selected content to the recommendation apparatus. In the recommendation apparatus, viewing histories indicating the content viewed by the users of a plurality of information processing apparatuses are stored in storage means, wherein each viewing history is categorized and stored on the basis of a user ID specifying a particular user as well as category information expressing one or more content categories associated with a recording medium loaded into a particular information processing apparatus. The recommendation apparatus acquires a user ID and category information transmitted from a particular information processing apparatus, and then specifies viewing histories associated with the category information, the viewing histories being those of other users and stored in the storage means. Subsequently, on the basis of the specified viewing histories, the recommendation apparatus generates a recommendation list showing a list of content for viewing.

Thus, according to an embodiment of the present invention, content can be viewed more comfortably and conveniently.

Embodiments of the invention will now be described, by way of example only, with reference to the accompanying drawings in which:
Fig. 1 is a block diagram illustrating an exemplary configuration of a network system in accordance with an example embodiment of the present invention;
Fig. 2 illustrates an exemplary configuration of a database in the user manager in Fig. 1;
Fig. 3 is an arrow chart explaining the flow of content streaming in the network system shown in Fig. 1;
Fig. 4 illustrates an exemplary default screen;
Fig. 5 illustrates an exemplary recommendation list displayed as a GUI;
Fig. 6 is a flowchart explaining exemplary application program processing;
Fig. 7 is a flowchart explaining exemplary user manager processing;
Fig. 8 is a flowchart explaining exemplary recommendation engine processing;
Fig. 9 illustrates an exemplary wish list;
Fig. 10 is a block diagram explaining pre-downloading processing;
Fig. 11 illustrates an exemplary data structure of content stored in the local storage shown in Fig. 10;
Fig. 12 is a flowchart explaining exemplary pre-downloading processing;
Fig. 13 is a diagram for explaining the manufacturing of a recording medium upon which is recorded data that can be played back by a playback device;
Fig. 14 is a diagram for explaining the manufacturing of a recording medium upon which is recorded data that can be played back by a playback device; and
Fig. 15 is a block diagram illustrating an exemplary configuration of a personal computer.

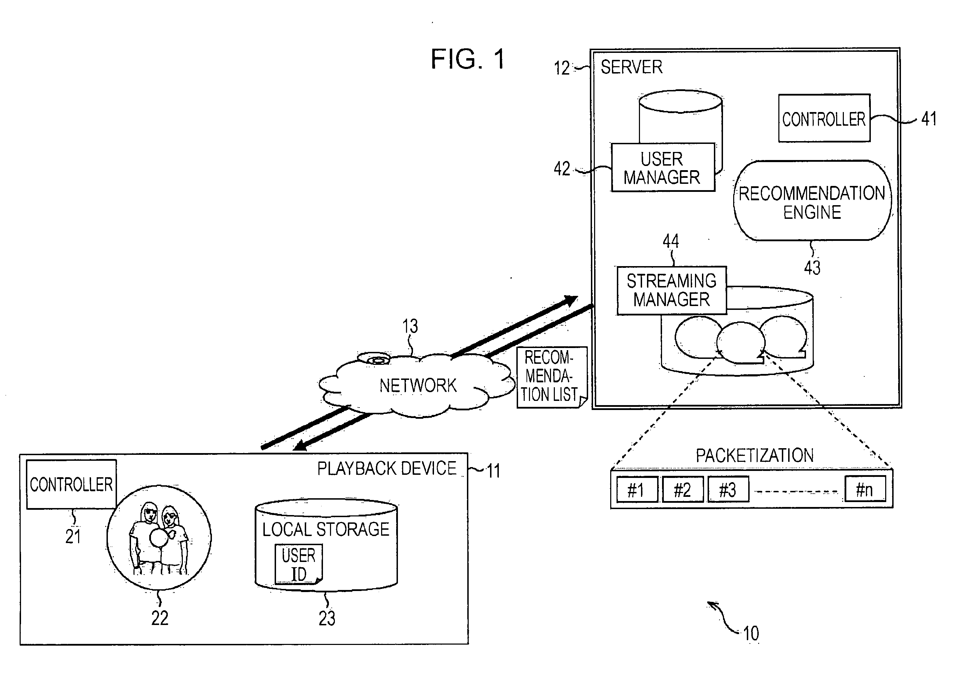

Fig. 1 is a block diagram illustrating an exemplary configuration of a network system 10 in accordance with an embodiment of the present invention. The network system 10 may involve, for example, a user using the playback device 11 to receive streaming delivery of desired content via the network 13 and from the server 12 of a business that provides content streaming services. The user is thereby able to view the content.

The user of the playback device 11 may, for example, be a user already subscribed with the business owning the server 12, and may input information such as his or her own user ID and password from the playback device 11. In so doing, the user is able to receive the content streaming services.

The playback device 11 is configured as a DVD (Digital Versatile Disc) player or DVD recorder, for example, and may be configured having a port for connecting to a network 13 such as the Internet.

The playback device 11 includes a drive into which a disc 22 such as a DVD may be loaded. Data is then read from the disc 22 loaded into the drive. In addition, in the case where the disc 22 is a writable recording medium, the playback device 11 may also write data to the disc 22.

The disc 22 is herein taken to be a Blu-ray^{™} disc by way of example. In contrast to the approximate 4.7 GB capacity of a DVD, a Blu-ray disc has a very large capacity of approximately 25 GB. The disc 22 also has a predetermined program recorded thereon in advance. When the disc 22 is played back by the playback device 11, the program recorded on the disc 22 is executed by the controller 21.

The program that has been recorded onto the disc 22 in advance is written in a program language that is intended for use on a network, for example, and not dependent on factors such as the computer model or OS. Thus, the program is configured to be executable regardless of the manufacturer or model of the playback device 11. The program may, for example, have been generated by the manufacturer of the disc 22, or by the business providing streaming services.

When compared to older formats such as DVD, Blu-ray discs, for example, feature improved navigation functions for presenting content recorded on-disc to the user and accepting user input specifying subsequent operation. Such navigation functions are realized as a result of the controller 21 executing a program recorded onto the Blu-ray disc (i.e., the disc 22). More specifically, a variety of navigation functions are realized by means of a family of application programs referred to as BD-J and written in the Java^{™} program language.

In addition, the disc 22 may also be delivered to the user in advance from the business that provides streaming services, for example. The disc 22 may, for example, store content in one or more genres desired by the user at the time of subscribing for services. Herein, such genres are taken to be "Movies for Kids", "Foreign Drama", and "Documentaries", for example.

Although it is possible for the user subscribed with the business providing streaming services to receive and view streaming delivery of desired content without inserting the disc 22 into the playback device 11, the disc 22 may be provided to users under a specific subscription. For example, a user with children in his or her family may be able to enter into a specific subscription whereby discs 22 in the "Movies for Kids" genre are provided. In addition, it may also be possible for a user to enter into specific subscriptions whereby discs 22 in the "Movies for Kids" genre, discs 22 in the "Foreign Drama" genre, and discs 22 in other genres are provided.

In this way, discs 22 are provided in respective genres according to the subscription made with the business that provides streaming services. Such discs can be said to match the user's specific preferences, and for this reason may be hereinafter referred to as preferred discs where appropriate.

The playback device 11 is provided with local storage 23 having a set capacity, and may be realized by components such as semiconductor memory and an HDD (Hard Disk Drive), for example. The local storage 23 is configured to store information such as the user ID of the user of the playback device 11, for example, while additionally storing portions of content data as appropriate.

The controller 21 includes components such as a processor and memory, for example, and controls the respective components of the playback device 11. The controller 21 is also configured to control processing related to communication conducted between the playback device 11 and the server 12 via the network 13.

The server 12 is, for example, a general-purpose computer, and is configured to function as a user manager 42, a recommendation engine 43, and a streaming manager 44. The above functional units are realized by means of programs or other software executed by a controller 41 provided with components such as a processor and memory.

The user manager 42 is configured to generate user management data on the basis of the respective user IDs of each user, for example. The user management data is generated in a directory format to be hereinafter described and then stored in a database. The user management data may contain information related to users' content viewing histories, as well as information related to the content that users desire to view in the future, for example.

The recommendation engine 43 is configured to generate, on the basis of information transmitted from the playback device 11, a recommendation list showing a list of content recommended to the user of the playback device 11. The recommendation engine 43 may, for example, be configured to take information transmitted from the playback device 11 such as a user ID and a disc ID specifying a disc 22, and on the basis thereof, acquire user management data from the database of the user manager 42 regarding users with preferences similar to those of the user of the playback device 11. Subsequently, the recommendation engine 43 generates a recommendation list on the basis of information contained in the user management data, such as the information related to viewing histories and the information related to content that users desire to view in the future. The recommendation list generated by the recommendation engine 43 is then transmitted to the playback device 11 via the network 13.

The streaming manager 44 is configured to take a request from the playback device 11, for example, and on the basis thereof read content data stored in the storage of the server 12 and then stream the content data via the network 13. The streamed content data may, for example, be divided into a plurality of packets (i.e., packetized) before transmission. In the example shown in Fig. 1, a single set of content data has been divided into a number of packets #1 to #n.

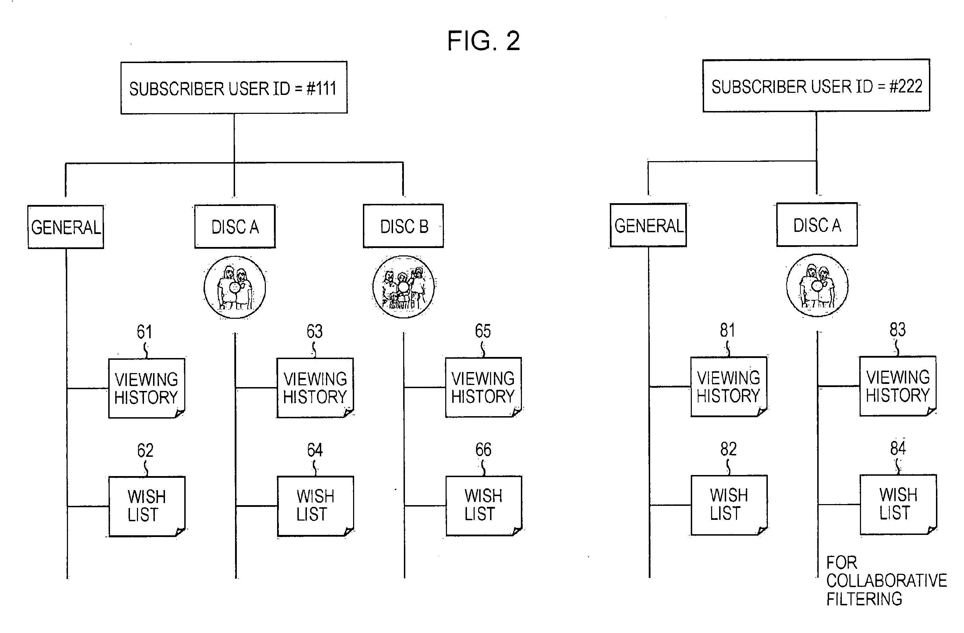

Fig. 2 illustrates an exemplary configuration of the database of user management data that is generated by the user manager 42. Fig. 2 shows the user management data for a user having the user ID #111, as well as the user management data for a user having the user ID #222.

The user management data for the user having the user ID #111 is separated into the three subdirectories "General", "Disc A", and "Disc B" under the root directory. Associated with each of the above three directories are a viewing history (i.e., information related to viewing history) and a wish list (i.e., information related to content that the corresponding user desires to view in the future). Herein, "Disc A" and "Disc B" are taken to express respectively different disc IDs. In other words, the user having the user ID #111 has subscribed with the business providing streaming services such that two types of preferred discs (in the present example, a preferred disc "Disc A" and a preferred disc "Disc B") are provided.

The wish lists herein are taken to be stored in the local storage 23 of the playback device 11.

The viewing history 61 associated with the "General" directory is taken to be information related to the viewing history of content viewed without inserting a preferred disc into the playback device 11. The viewing history 63 associated with the "Disc A" directory is taken to be information related to the viewing history of content viewed with the preferred disc having the disc ID "Disc A" inserted into the playback device 11. The viewing history 65 associated with the "Disc B" directory is taken to be information related to the viewing history of content viewed with the preferred disc having the disc ID "Disc B" inserted into the playback device 11.

In addition, the wish list 62 associated with the "General" directory is taken to be information related to content that the corresponding user desires to view in the future, wherein the information was input at a time when a preferred disc was not inserted into the playback device 11. The wish list 64 associated with the "Disc A" directory is taken to be information related to content that the corresponding user desires to view in the future, wherein the information was input at a time when the preferred disc having the disc ID "Disc A" was inserted into the playback device 11. The wish list 66 associated with the "Disc B" directory is taken to be information related to content that the corresponding user desires to view in the future, wherein the information was input at a time when the preferred disc having the disc ID "Disc B" was inserted into the playback device 11.

The user management data for the user having the user ID #222 is similarly structured. However, the user management data for the user having the user ID #222 is separated into the two subdirectories "General" and "Disc A" under the root directory, with no "Disc B" directory. In other words, the user having the user ID #222 has subscribed with the business providing streaming services such that a single type of preferred disc (in the present example, the preferred disc "Disc A") is provided.

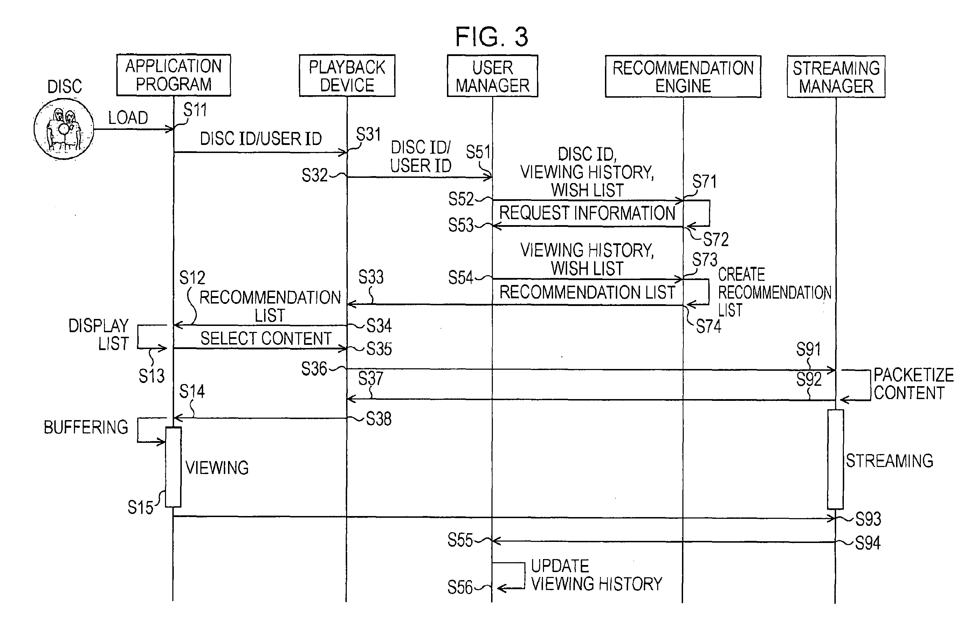

Fig. 3 is an arrow chart explaining the flow of content streaming in the network system shown in Fig. 1. In the example shown in Fig. 3, a preferred disc having the disc ID "disc A" is inserted into the playback device 11, a recommendation list is generated by the server 12, and content included in the recommendation list is then viewed.

In addition, in the example shown in Fig. 3, a program that has been recorded onto the disc 22 in advance is herein referred to as an application program. In the present case, when the preferred disc having the disc ID "Disc A" is inserted into the playback device 11, the application program that has been recorded onto that preferred disc in advance is taken to be automatically executed by the controller 21.

In step S11, the application program identifies the disc ID and the user ID and supplies this information to the controller 21 of the playback device 11. In step S31, the above ID information is acquired by the playback device 11. Herein, the disc ID ("Disc A") recorded onto the preferred disc in advance and the user ID stored in the local storage 23 are identified.

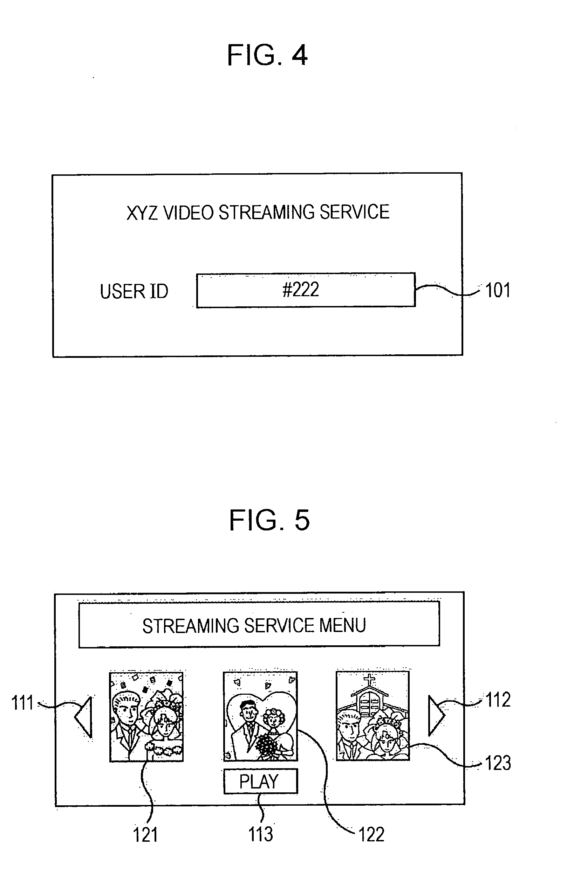

In the case where the user is using the playback device 11 for the first time, for example, the user ID is not stored in the local storage 23, and thus in this case the application program generates screen display data like that shown in Fig. 4, which is then displayed on a display or similar device connected to the playback device 11. In the example shown in Fig. 4, the user ID has been input into an area 101 on the screen. The user thus inputs into the area 101 the user ID (in the present example, #222) issued to him or her upon subscribing.

In step S32, the playback device 11 transmits the disc ID and the user ID acquired in step S31 to the server 12. In step S51, the above information is received by the user manager 42 of the server 12.

In step S52, the user manager 42 takes the user ID and the disc ID received in step S51, and on the basis thereof searches the database of user management data. The user manager 42 thereby identifies the viewing history and the wish list of the corresponding user and supplies this information to the recommendation engine 43 together with the disc ID. In step S71, the above information is acquired by the recommendation engine 43. For example, if the user ID and the disc ID received in step S51 are #222 and "Disc A", respectively, then the viewing history 83 and the wish list 84 shown in Fig. 2 are acquired.

In step S72, the recommendation engine 43 issues a request to the user manager 42 for information used to generate a recommendation list. Herein, the viewing histories and wish lists of other users owning the preferred disc with the disc ID "Disc A" are requested by way of example.

In step S53, the user manager 42 receives the request from the recommendation engine 43, searches the database of user management data, and in step S54, supplies the requested information to the recommendation engine 43. In the example shown in Fig. 2, the viewing history 63 and the wish list 64 in the "Disc A" directory of another user having the user ID #111 are supplied to the recommendation engine 43.

In step S73, upon acquiring the viewing history 63 and the wish list 64, the recommendation engine 43 generates a recommendation list on the basis of the acquired information. In step S74, the recommendation engine 43 transmits the recommendation list to the playback device 11. The recommendation list transmitted herein is then received by the playback device 11 in step S33.

After being received by the playback device 11 in step S33, the recommendation list is subsequently supplied to the application program in step S34. In step S12, the application program acquires the recommendation list. Subsequently, the application program causes the recommendation list to be displayed on the screen of a display or similar device connected to the playback device 11. The application program then waits to accept the selection of content by the user.

At this point, a screen like that shown in Fig. 5, for example, is displayed on the display connected to the playback device 11. Fig. 5 shows an exemplary recommendation list screen displayed as a GUI (Graphical User Interface). The GUI herein may be operated via the remote of the playback device 11 or similar device (not shown in the drawings). In the example shown in Fig. 5, content recommended to the user is displayed as the thumbnails 121 to 123. When either the button 111 or the button 112 is pressed, the thumbnails may scroll in the horizontal direction as seen in Fig. 5, for example, thereby causing content thumbnails not shown on the current screen to be displayed.

When, for example, the button 113 is pressed while one of the thumbnails displayed on the screen is in a selected state, the content corresponding to the selected thumbnail is taken to be selected.

In step S13, the application program takes information specifying the content that was selected by the user from that shown in the recommendation list displayed on the screen, and then supplies the above information to the controller 21 of the playback device 11. In step S35, the above information is acquired by the playback device 11.

In step S36, the playback device 11 transmits information specifying the selected content to the server 12. In step S91, the above information is acquired by the streaming manager 44 of the server 12.

In step S92, the streaming manager 44 reads the data for the selected content from the storage of the server 12, and then packetizes the read data. In step S92, the streaming manager 44 transmits the content data packets to the playback device 11. The packets transmitted at this point are then received by the playback device 11 in step S37.

In step S38, the content data packets are supplied to the application program. In step S14, the application program acquires and begins buffering the content data packets. In so doing, the user is able to view content displayed on the display or similar device connected to the playback device 11.

In step S15, the application program issues a command to the application program to stop viewing (i.e., playback) of the content. A playback stop command is then transmitted from the application program to the server 12 via the playback device 11. The above command is then received by the streaming manager 44 of the server 12 in step S93.

In step S94, the streaming manager 44 sends a viewing history update request to the user manager 42. The update request is then acquired by the user manager 42 in step S55.

In step S56, the user manager 42 updates the viewing history in the user management data. In the present example, the user ID and the disc ID acquired in step S51 are #222 and "Disc A", respectively, and thus the viewing history 83 shown in Fig. 2 is updated. At this point, the viewing history 83 may be updated with additional information indicating that the content read in step S91 has been viewed one time, for example.

In other words, the user manager 42 is configured to categorize and store viewing histories for each user specified by a user ID, and in addition, for each genre of preferred disc specified by a disc ID.

In so doing, content can be viewed. The series of processes described above with reference to Fig. 3 may be executed as one of the services that make use of the navigation functions of the disc 22, for example.

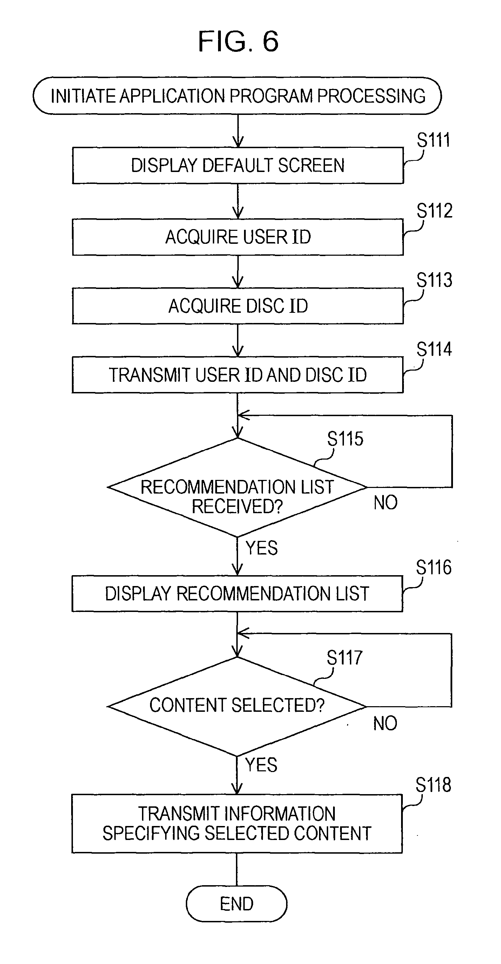

The processing executed by the application program in Fig. 3 will now be described in further detail and with reference to the flowchart shown in Fig. 6. The present processing may be automatically executed when a disc 22 is inserted into the playback device 11, for example.

In step S111, the application program causes a default screen to be displayed. At this point, the application program may cause a screen like that shown in Fig. 4 to be displayed, for example, thereby prompting the user to input his or her user ID. If the user ID is already stored in the local storage 23, for example, then the above process may be omitted.

In step S112, the application program acquires the user ID. At this point, the user ID #222 is acquired by way of example.

In step S113, the application program acquires the disc ID. At this point, the disc ID "Disc A" is acquired by way of example.

In step S114, the application program causes the user ID and the disc ID to be transmitted from the playback device 11 to the server 12. The above processes correspond to step S11, step S31, and step S32 in Fig. 3.

In step S115, the application program determines whether or not a recommendation list has been received from the server 12, and remains in standby until it is determined that a recommendation list has been received. If it is determined in step S115 that a recommendation list has been received, then the process proceeds to step S116.

In step S116, the application program causes the recommendation list to be displayed. At this point, the application program may cause a screen like that shown in Fig. 5 to be displayed, for example, thereby prompting the user to select content. The above process correspond to step S12 in Fig. 3.

In addition, in step S116, the recommendation list may also be edited according to the preferred disc type. For example, if the processing in step S116 is executed by an application program that has been recorded onto a preferred disc having a disc ID corresponding to the "Movies for Kids" genre, then additional processing may be performed to display content titles in Japanese hiragana script to make the titles easier to read for children. In addition, processing may be performed to modify the images of GUI buttons or similar elements to images of predetermined cartoon or other characters, for example.

In step S117, the application program determines whether or not content has been selected, and remains in standby until it is determined that particular content has been selected. If it is determined in step S117 that particular content has been selected, then the process proceeds to step S18.

In step S118, the application program transmits information specifying the selected content to the server 12. The above processes correspond to step S13, step S34, and step S35 in Fig. 3.

Processing by the application program is thus executed as described above.

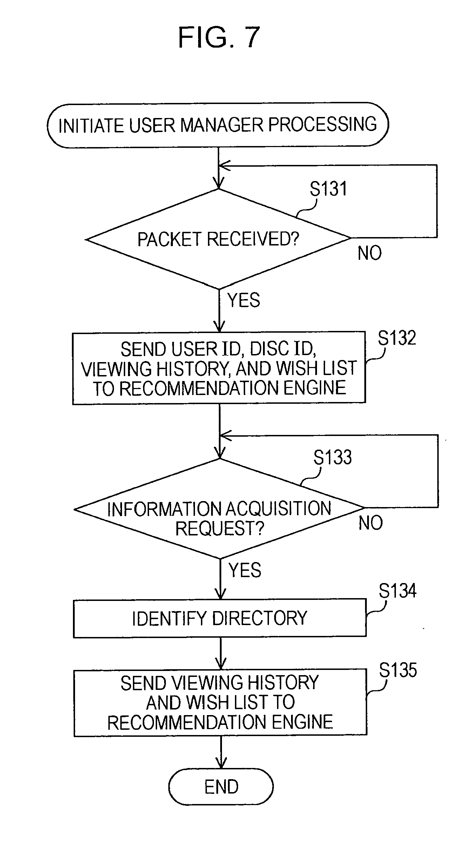

The processing executed by the user manager 42 in Fig. 3 will now be described in further detail and with reference to the flowchart shown in Fig. 7.

In step S131, the user manager 42 determines whether or not a packet has been received from the playback device 11, and remains in standby until it is determined that a packet has been received. If it is determined in step S131 that a packet has been received from the playback device 11, then the process proceeds to step S132.

In step S132, the user manager 42 supplies the recommendation engine 43 with the user ID and the disc ID contained in the packet received from the playback device 11, as well as the viewing history and wish list corresponding to the above user ID and disc ID. In the present example, the viewing history 83 and the wish list 84 in Fig. 2 are supplied. The above process corresponds to step S52 in Fig. 3.

In step S133, the user manager 42 determines whether or not an acquisition request for information used to generate a recommendation list has been received from the recommendation engine 43, with the user manager 42 remaining in standby until it is determined that an information acquisition request has been received. If it is determined in step S133 that an acquisition request for information used to generate a recommendation list has been received from the recommendation engine 43, then the process proceeds to step S134.

At this point, the recommendation engine 43 sends, to the user manager 42, information whereby a given directory in the database of user management data can be specified, and requests information therein for generating a recommendation list.

In step S134, the user manager 42 identifies a particular directory in the database of user management data, the directory being identified on the basis of the information acquisition request received from the recommendation engine 43. In the present example, the "Disc A" directory of the user having the user ID #111 shown by way of example in Fig. 2 is identified.

In step S135, the user manager 42 supplies the recommendation engine 43 with the viewing history and the wish list from the directory that was identified in step S134. In the present example, the viewing history 63 and the wish list 64 are supplied to the recommendation engine 43. The above process corresponds to step S54 in Fig. 3.

Processing by the user manager 42 is thus executed as described above.

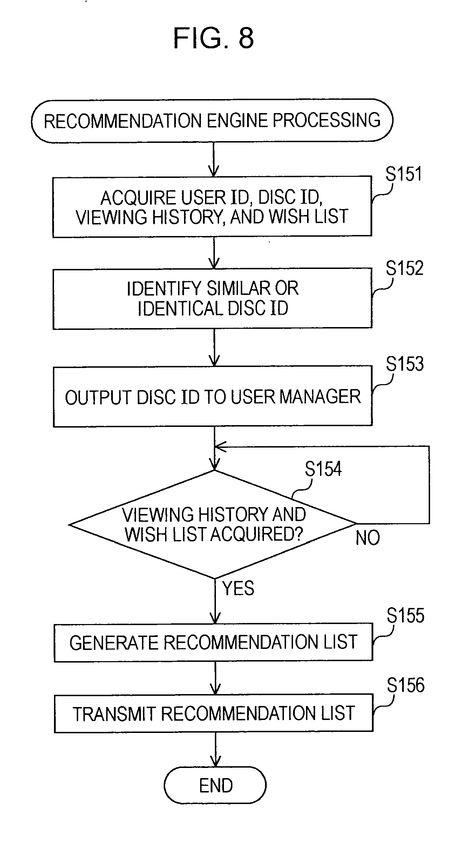

The processing executed by the recommendation engine 43 in Fig. 3 will now be described in further detail and with reference to the flowchart shown in Fig. 8.

In step S151, the recommendation engine 43 acquires the user ID and disc ID, as well as the viewing history and wish list corresponding to the above user ID and disc ID, that were supplied from the user manager 42. The above process corresponds to step S71 in Fig. 3.

In step S152, the recommendation engine 43 identifies a disc ID that is similar or identical to the disc ID that was acquired in step S151. At this point, the recommendation engine 43 may take the disc ID, viewing history, and wish list acquired in step S151, and on the basis thereof, identify a disc ID similar or identical to the above disc ID, for example. For example, in the case where the disc ID "Disc A" is associated with the "Movies for Kids" genre, a disc ID associated with a genre such as "Animation" may be identified as being similar to "Disc A".

At this point, the recommendation engine 43 may analyze the types of content (genres, for example) contained in the viewing history and the wish list, and then identify a similar disc ID using a predetermined technique. For example, the recommendation engine 43 may be configured to identify a similar disc ID as being the disc ID associated with the genre appearing with the highest frequency among the genres of the content contained in the viewing history and wish list acquired in step S151. Alternatively, if the results of analyzing the types of content contained in the viewing history and the wish list indicate that identifying a similar disc ID is difficult, then the recommendation engine 43 may continue processing without identifying a similar disc ID. Herein, the process will be described assuming that the recommendation engine 43 identifies only identical disc IDs, and does not identify a similar disc ID in step S152.

In step S153, the recommendation engine 43 sends information (including the disc ID that was identified in step S152) to the user manager 42, thereby requesting information for generating a recommendation list. The above process corresponds to step S72 in Fig. 3.

In step S154, the recommendation engine 43 determines whether or not a viewing history and a wish list have been acquired from the user manager 42, and remains in standby until it is determined that a viewing history and a wish list have been acquired. If it is determined in step S154 that a viewing history and a wish list have been acquired, then the process proceeds to step S155.

In step S155, the recommendation engine 43 generates a recommendation list on the basis of the viewing history and the wish list acquired from the user manager 42. At this point, the recommendation engine 43 may, for example, specify a predetermined number of content titles in order of frequency from among those contained in the viewing history and wish list acquired from the user manager 42, thereby generating a recommendation list that recommends the specified content.

It should also be appreciated that the generation of a recommendation list may also be configured to use only the viewing history, without using the wish list.

In step S156, the recommendation engine 43 transmits the recommendation list generated in step S155 to the playback device 11. The above process corresponds to step S74 in Fig. 3.

Processing by the recommendation engine 43 is thus executed as described above.

In so doing, the user is able to receive recommendations for content suited to his or her own preferences simply by inserting a preferred disc into the playback device 11.

For example, in the streaming services of the related art, a user subscribing to streaming services may be one member of a family (the father, for example), and it is thus conceivable that in many cases a child may use his or her father's account to view streaming content. Meanwhile, when recommending content to the user, the user's viewing history is primarily referenced in order to generate a recommendation list. Thus, in the case stated above, a recommendation list is generated by referencing the viewing history of the entire family, and as a result, suitable content might not be recommended.

In an embodiment of the present invention, a recommendation list is generated containing content associated with a preferred disc. For example, in the example described above, if the father gives his child a preferred disc having the disc ID "Disc A", then the child is able to receive recommendations for content suitable for children simply by inserting that preferred disc into the playback device 11. In addition, if the father gives a preferred disc having the disc ID "Disc B" to the mother, for example, then the mother is also able to receive recommendations for content suited to married women simply by inserting that preferred disc into the playback device 11. As a result, it becomes possible for a family to view content suited to the respective preferences of each member of the family.

Furthermore, in the technology of the related art, collaborative filtering or similar techniques are used to search the viewing histories of users having similar preferences, and a result complex algorithms are processed.

However, in an embodiment of the present invention, the viewing histories and wish lists of respective users are stored in a database in association with the disc IDs of respective preferred discs, as described with reference to Fig. 2. For this reason, it becomes possible to easily acquire the viewing histories and wish lists of users having similar preferences, without processing complex algorithms.

Meanwhile, when viewing streaming content, buffering might take a long time due to network congestion or other factors. Thus, upon selecting content for viewing, for example, a substantial period of time may elapse before that content can be actually viewed. In such cases, the viewing of content can commence immediately upon selection if, for example, the data for the leading portion of the content is downloaded in advance.

An example of the case wherein the data for the leading portions of content is downloaded in advance will now be described.

In an embodiment of the present invention, the application program that has been recorded onto the disc 22 in advance is configured to execute processing to automatically download data for the leading portions of particular content from among the content included in a wish list. The above process may be executed as another one of the services that make use of the navigation functions of the disc 22, for example.

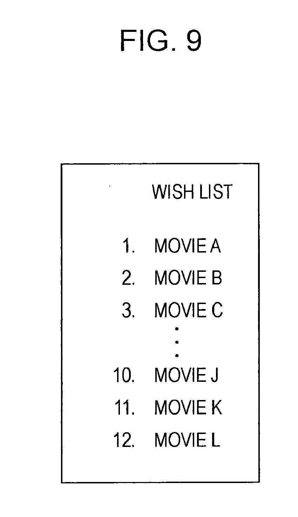

For example, consider the case wherein a wish list like that shown in Fig. 9 is stored in the local storage 23 of the playback device 11. When the disc 22 is inserted into the playback device 11, the application program that has been recorded onto the disc 22 in advance may subsequently specify the first ten content titles in the wish list, for example.

Wish lists stored in the local storage 23 of the playback device 11 may also be managed separately for each preferred disc. For example, when a preferred disc having the disc ID "Disc A" is inserted into the playback device 11, the content input by the user as content he or she desires to view in the future may be managed as the "Disc A" wish list. When a preferred disc having the disc ID "Disc B" is inserted into the playback device 11, the content input by the user as content he or she desires to view in the future may be managed as the "Disc B" wish list.

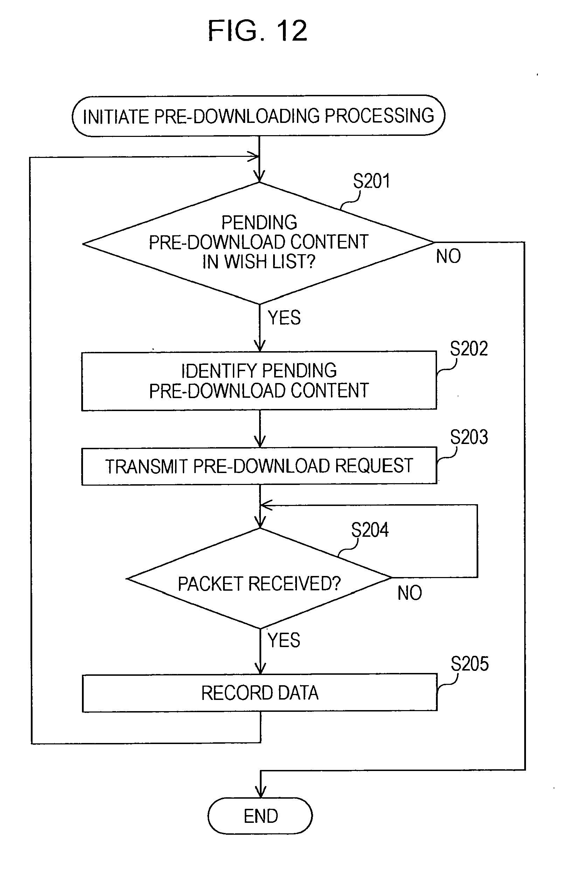

In the example shown in Fig. 9, 12 content titles are listed in the wish list. The numbers on the left side of Fig. 9 indicate the order in which the user desires to view the content. In the example shown in Fig. 9, the content ranked 1st is "Movie A", the content ranked 2nd is "Movie B", the content ranked 3rd is "Movie C", etc. The content ranked 10th is "Movie J", the content ranked 11th is "Movie K", and the content ranked 12th is "Movie L".

In the present example, the application program transmits information respectively identifying the content from "Movie A" to "Movie J" (i.e., the top ten content titles in the wish list) to the server 12 from the playback device 11. At this point, information respectively identifying the content from "Movie A" to "Movie J" is transmitted to the server 12 together with information requesting transmission of the data for the leading portions of the content.

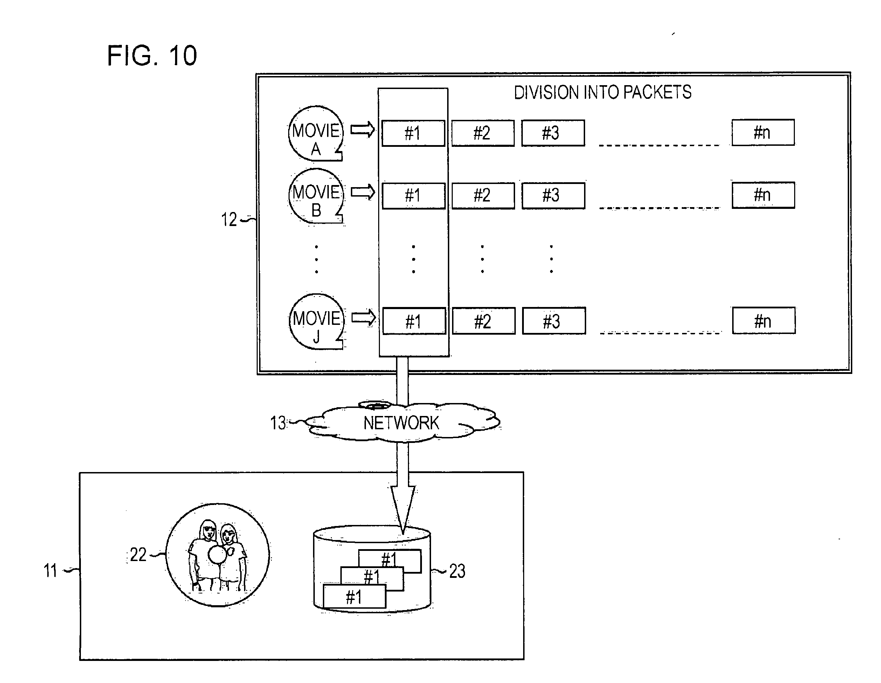

Subsequently, as shown in Fig. 10, the streaming manager 44 of the playback device 11 reads the data for the content from "Movie A" to "Movie J" from storage, packetizes the read data, and then transmits the respective first packets to the playback device 11. In the example shown in Fig. 10, the first packets among the data packets for the respective content are labeled "#1".

The first packets of the content data transmitted from the server 12 are then stored in the local storage 23 of the playback device 11.

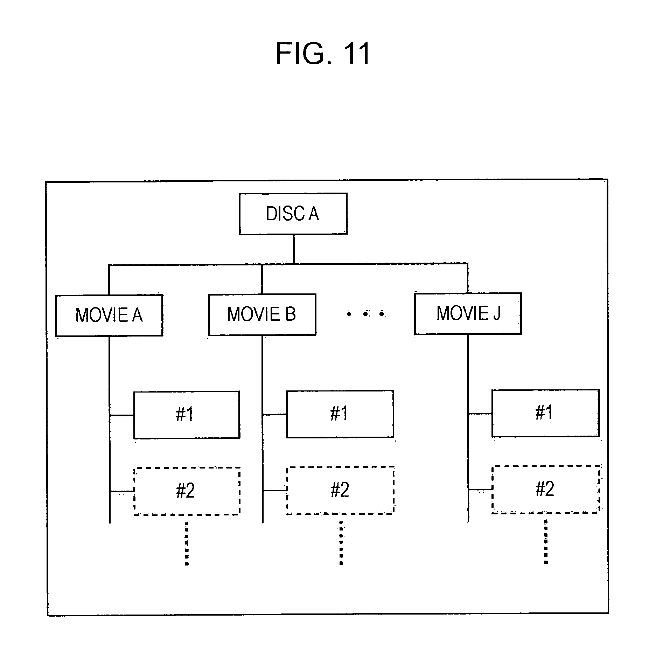

Fig. 11 is a diagram explaining the data structure of content stored in the local storage 23. As shown in Fig. 11, the content data is stored as data in a directory structure. The root directory herein is "Disc A", indicating that the content data stored in the local storage 23 was downloaded on the basis of the "Disc A" wish list.

Under the "Disc A" directory there exist the subdirectories "Movie A", "Movie B", ..., "Movie J". In addition, the first packets ("#1") of the respective content data for "Movie A" to "Movie J" are stored in association with their respective directories. In the example shown in Fig. 11, the second and subsequent packets ("#2"...) of the respective content data for "Movie A" to "Movie J" are indicated by dotted lines, and additionally, are shown as not yet downloaded.

Pre-downloading processing will now be described with reference to the flowchart shown in Fig. 12. Pre-downloading processing is processing whereby the data for the leading portions of content is downloaded in advance, and is executed by the application program that has been recorded onto the disc 22 in advance. The above processing may be automatically executed when the disc 22 is inserted into the playback device 11, for example.

In step S201, the application program determines whether or not there exists pending pre-download content in a wish list. For example, if a preferred disc having the disc ID "Disc A" has been inserted into the playback device 11, then the application program may determine whether or not there exists pending pre-download content in the "Disc A" wish list. Likewise, if a preferred disc having the disc ID "Disc B" has been inserted into the playback device 11, then the application program may determine whether or not there exists pending pre-download content in the "Disc B" wish list.

If it is determined in step S201 that there does exist pending pre-download content in the wish list, then the process proceeds to step S202.

In step S202, the application program identifies the pending pre-download content in the wish list.

In step S203, the application program transmits a pre-download request to the server 12. At this point, information specifying "Movie A" may be transmitted to the server 12 together with information requesting transmission of the data for the leading portion of the content.

In step S204, the application program determines whether or not a content data packet has been received from the server 12, and remains in standby until it is determined that a pack has been received.

If it is determined in step S204 that a content data packet has been received from the server 12, then the process proceeds to step S205, and the application program subsequently stores the packet in the local storage 23. At this point, a flag may be set indicating that "Movie A" in the wish list has been pre-downloaded, for example. In so doing, the application program hereinafter recognizes that "Movie A" has been pre-downloaded.

After processing step S205, the process returns to step S201, wherein the application program again determines whether or not there exists pending pre-download content in the wish list and again executes the processing from step S202 to step S205. In the present example, content for "Movie B" is pre-downloaded at this point.

In this way, the processing from step S201 to step S205 is repeatedly executed. When, for example, the content for the top ten titles in the wish list have been pre-downloaded, then it is determined in step S201 that there does not exist pending pre-download content in the wish list, and the process terminates.

Pre-downloading processing is thus conducted as described above.

Although the data for the leading portions of content (the first packets, for example) is herein described as being stored in the local storage 23, the present invention is not limited thereto. For example, the data for the leading portions of content may also be recorded to a disc 22 inserted into the playback device 11 in the case where the disc 22 is a writable recording medium.

In so doing, the data for the leading portions of content is downloaded in advance, thereby enabling content to be viewed immediately upon selection, for example.

Although the foregoing description assumes that a disc 22 has been inserted into the playback device 11, the present invention is not limited to the insertion of disc-shaped recording media into the playback device. For example, it is also possible to apply an embodiment of the present invention to recording media such as USB memory and smart (IC) cards, for example.

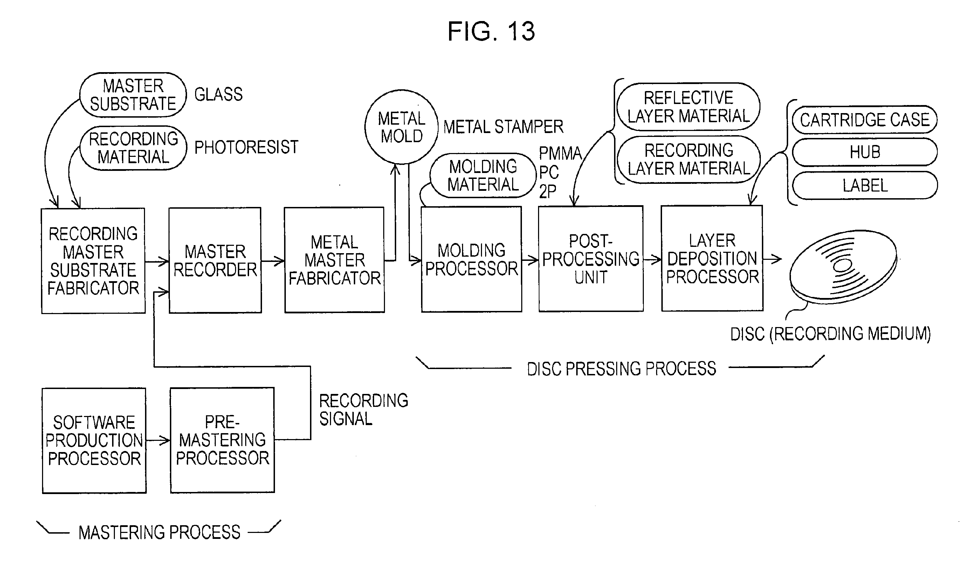

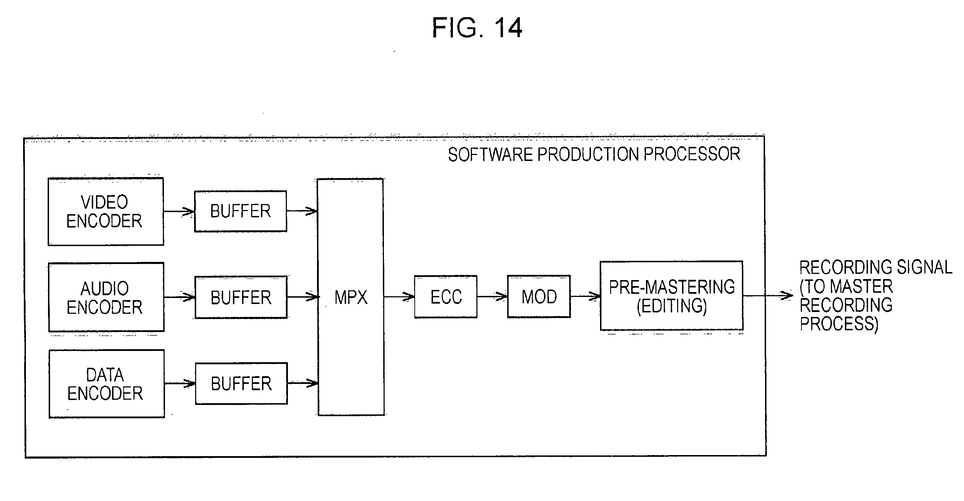

An exemplary process for manufacturing a disc 22 acting herein as the recording medium storing data that can be played back by the playback device 11 will now be described with reference to Figs. 13 and 14.

As shown in Fig. 13, a master substrate of glass or similar material is first prepared. A recording material such as photoresist is then applied upon the master substrate. In so doing, a recording master substrate is manufactured.

Then, as shown in Fig. 14, a software production processor uses a video encoder to encode video data into a format that can be played back by the playback device 11. The encoded video data is then stored in a temporary buffer. Audio data that has been similarly encoded by an audio encoder is also stored in a temporary buffer, while non-datastream data (such as indexes, playlists, and playitems, for example) that has been similarly encoded by a data encoder is also stored in a temporary buffer. The video data, audio data, and non-datastream data stored in respective buffers is then multiplexed into a synchronized signal by a multiplexer (MPX), and error-correcting code (ECC) is then appended by an error-correcting code circuit. Subsequently, a predetermined modulation is applied by a modulation circuit (MOD), and the resulting data is then recorded to magnetic tape or similar media according to a predetermined format. In so doing, the software to be recorded to a recording medium that can be played back by the playback device 11 is produced.

The software is then edited (i.e., premastered) as appropriate, thereby generating a signal in the format to be recorded to an optical disc. Subsequently, as shown in Fig. 13, a laser beam is modulated in accordance with the recording signal such that the laser beam is incident upon the photoresist coating the master substrate. In so doing, the photoresist on the master substrate is exposed in accordance with the recording signal.

Subsequently, the master substrate is developed so as to cause pits to form on the master substrate. The master substrate thus prepared is then subject to electroforming or a similar process to produce a metal master upon which the pits on the glass master have been transcribed. A metal stamper is then produced from the metal master, and is herein used as the metal mold.

A material such as PMMA (acrylic) or PC (polycarbonate) is then injected into the metal mold and hardened. Alternatively, the metal stamper may be coated with a material such as a 2P resin (i.e., an ultraviolet-curing resin) and then irradiated with ultraviolet light to harden. In so doing, the pits on the metal stamper are transcribed to a resin-based replica.

Upon the replica thus generated, a reflective layer is then formed by means of a technique such as vapor deposition or sputtering. Alternatively, the reflective layer may be formed upon the generated replica by means of spin coating.

Subsequently, the inner and outer surfaces of the disc are processed, and further treatments are performed to join two discs together, for example. A label is applied to the disc, and the disc is then attached to a hub and inserted into a cartridge. The above thus completes the production of a recording medium storing data that can be played back by the playback device 11.

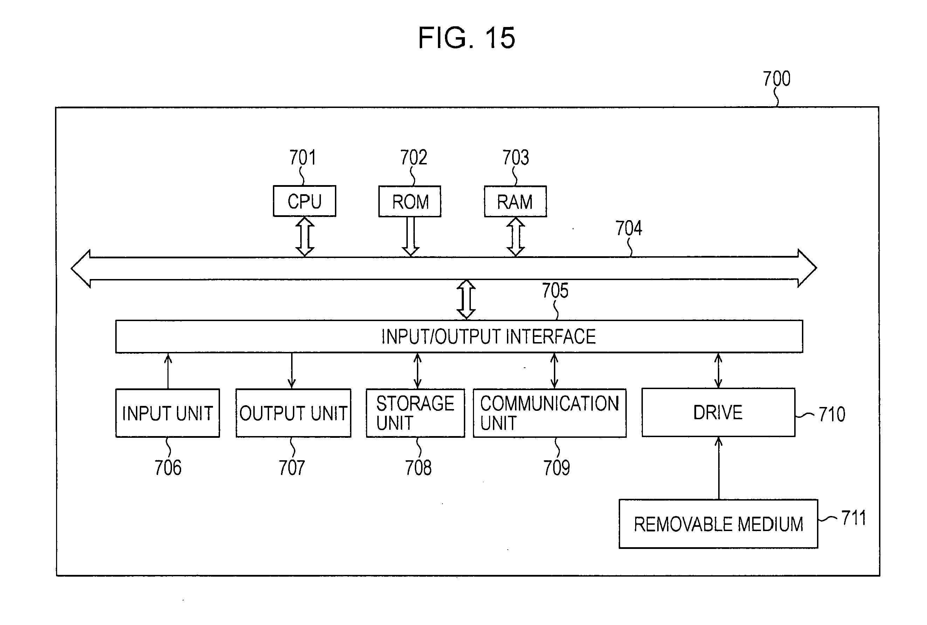

The foregoing series of processes may be executed by means of hardware or software. In the case where the foregoing series of processes is executed by means of software, a program constituting such software may be installed from a network or recording medium onto a computer built into special-purpose hardware, or alternatively, onto a general-purpose personal computer 700 capable of executing various functions as a result of installing various programs thereon. An exemplary personal computer 700 is illustrated in Fig. 15.

In Fig. 15, the CPU (Central Processing Unit) 701 executes various processes by following a program stored in the ROM (Read-Only Memory) 702, or alternatively, a program that has been loaded into the RAM (Random Access Memory) 703 from the storage unit 708. The RAM 703 may also store other information as appropriate, such as data used in the execution of various processes by the CPU 701.

The CPU 701, ROM 702, and RAM 703 are mutually connected via a bus 704. An input/output interface 705 is also connected to the bus 704.

The input/output interface 705 is connected to: an input unit 706 that includes components such as a keyboard and mouse; an output unit 707 that includes components such as a CRT (Cathode Ray Tube) display or LCD (Liquid Crystal Display) panel, as well as one or more speakers; a storage unit 708 that includes components such as a hard disk; and a communication unit 709 that includes a LAN card or similar network interface card. The communication unit 709 conducts communication processes via various networks, including the Internet.

The input/output interface 705 may also be connected to a drive 710 as appropriate. When a removable medium 711 such as a magnetic disk, optical disc, magneto-optical disk, or semiconductor memory is appropriately loaded into the drive 710, one or more computer programs are read from the removable medium 711 and may be installed to the storage unit 708 as appropriate.

In the case where the foregoing series of processes are executed by means of software, the one or more programs constituting such software may be installed from a network such as the Internet or from a recording medium such as the removable medium 711.

As shown in Fig. 15, the recording medium herein may be separate from the main body of the device and realized by means of a removable medium 711 distributed in order to provide programs to one or more users. The removable medium 711 a magnetic disk (such as a floppy^{™} disk), an optical disc (such as a CD-ROM (Compact Disc Read-Only Memory) or DVD (Digital Versatile Disc)), a magneto-optical disk (such as an MD (MiniDisc^{™})), or semiconductor memory upon which one or more programs have been recorded. However, the above recording medium may also be distributed to users after having been incorporated into the main body of the relevant device in advance, and may be realized by means of a component such as the ROM 702 or the hard disk included in the storage unit 708, and onto which one or more programs have been recorded.

In addition, in the present specification, the steps whereby the foregoing series of processes are executed are processed in a time series following the order described in the foregoing. However, it should be appreciated as obvious that the steps herein may also be processed in parallel or executed individually without being processed in a time series.

The present application contains subject matter related to that disclosed in Japanese Priority Patent Application JP 2008-100236 filed in the Japan Patent Office on April 8, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus, comprising:
category information transmitting means for transmitting, to a server, category information expressing one or more content categories associated with a recording medium loaded into the apparatus;
recommendation list presenting means for receiving and presenting a recommendation list showing a server-generated list of content associated with the category information; and
selection information transmitting means for accepting the selection of content included in the recommendation list, and then transmitting, to the server, information specifying the selected content.

2. The information processing apparatus according to Claim 1, wherein the category information transmitting means additionally transmits a user ID specifying the user together with the category information.

3. The information processing apparatus according to Claim 1, wherein, given a content viewing history accumulated on the server, the recommendation list presenting means presents a recommendation list that has been generated on the basis of the viewing history for content viewed on another information processing apparatus into which a recording medium has been loaded, wherein the category information of the recording medium is similar or identical to the category information transmitted by category information transmitting means.

4. The information processing apparatus according to Claim 1, further comprising:
downloading means;
wherein, in the case where the recording medium is loaded into the apparatus, the downloading means downloads a portion of content data included in a wish list showing a list of content that the user of the recording medium desires to view in the future.

5. An information processing method, comprising the steps of:
transmitting, to a server, category information expressing one or more content categories associated with a recording medium;
receiving and presenting a recommendation list showing a server-generated list of content associated with the category information; and
accepting the selection of content included in the recommendation list, and then transmitting, to the server, information specifying the selected content.

6. A recording medium having recorded thereon category information expressing one or more predefined content categories, as well as a program for acquiring a recommendation list of content associated with the category information, the program causing a computer into which the recording medium is loaded to execute processing comprising the steps of:
communicating with a server and causing the category information to be transmitted to the server;
receiving and then presenting a recommendation list showing a server-generated list of content associated with the category information; and
accepting the selection of content included in the recommendation list, and then transmitting, to the server, information specifying the selected content.

7. A recommendation apparatus that recommends content for viewing by users of information processing apparatuses, the recommendation apparatus comprising:
storage means for storing viewing histories indicating the content viewed by the users of a plurality of information processing apparatuses, wherein each viewing history is categorized and stored on the basis of a user ID specifying a particular user as well as category information expressing one or more content categories associated with a recording medium loaded into a particular information processing apparatus;
specifying means for acquiring a particular user ID and category information transmitted from a particular information processing apparatus, and then specifying the viewing histories of other users stored in the storage means that are associated with the category information; and
generating means for generating, on the basis of the viewing histories specified by the specifying means, a recommendation list showing a list of content for viewing.

8. A recommendation method in accordance with an embodiment of the present invention is a method whereby content is recommended for viewing by users of information processing apparatuses, and comprises the steps of:
storing, in storage means, viewing histories indicating the content viewed by users of a plurality of information processing apparatuses, wherein each viewing history is categorized and stored on the basis of a user ID specifying a particular user as well as category information expressing one or more content categories associated with a recording medium loaded into a particular information processing apparatus;
acquiring a particular user ID and category information transmitted from a particular information processing apparatus, and then specifying the viewing histories of other users stored in the storage means that are associated with the category information; and
generating, on the basis of the viewing histories specified by the specifying means, a recommendation list showing a list of content for viewing.

9. An information processing system, comprising:
an information processing apparatus; and
a recommendation apparatus;
wherein the information processing apparatus is provided with
category information transmitting means for transmitting, to the recommendation apparatus, category information expressing one or more content categories associated with a recording medium loaded into the information processing apparatus,
recommendation list presenting means for receiving and presenting a recommendation list generated by the recommendation apparatus and showing a list of content associated with the category information, and
selection information transmitting means for accepting the selection of content included in the recommendation list, and then transmitting, to the recommendation apparatus, information specifying the selected content,
and wherein the recommendation apparatus is provided with
storage means for storing viewing histories indicating the content viewed by the users of a plurality of information processing apparatuses, wherein each viewing history is categorized and stored on the basis of a user ID specifying a particular user as well as category information expressing one or more content categories associated with a recording medium loaded into a particular information processing apparatus,
specifying means for acquiring a particular user ID and category information transmitted from a particular information processing apparatus, and then specifying the viewing histories of other users stored in the storage means that are associated with the category information, and
generating means for generating, on the basis of the viewing histories specified by the specifying means, a recommendation list showing a list of content for viewing.

10. An information processing apparatus, comprising:
a category information transmitter configured to transmit, to a server, category information expressing one or more content categories associated with a recording medium loaded into the apparatus;
a recommendation list presentation unit configured to receive and then present a recommendation list showing a server-generated list of content associated with the category information; and
a selection information transmitter configured to accept the selection of content included in the recommendation list, and then transmit, to the server, information specifying the selected content.

11. A recommendation apparatus that recommends content for viewing by users of information processing apparatuses, the recommendation apparatus comprising:
a storage unit configured to store viewing histories indicating the content viewed by the users of a plurality of information processing apparatuses, wherein each viewing history is categorized and stored on the basis of a user ID specifying a particular user as well as category information expressing one or more content categories associated with a recording medium loaded into a particular information processing apparatus;
a specifying unit configured to acquire a particular user ID and category information transmitted from a particular information processing apparatus, and then specify the viewing histories of other users stored in the storage unit that are associated with the category information; and
a list generator configured to generate, on the basis of the viewing histories specified by the specifying unit, a recommendation list showing a list of content for viewing.

12. An information processing system, comprising:
an information processing apparatus; and
a recommendation apparatus;
wherein the information processing apparatus is provided with
a category information transmitter configured to transmit, to the recommendation apparatus, category information expressing one or more content categories associated with a recording medium loaded into the information processing apparatus,
a recommendation list presentation unit configured to receive and then present a recommendation list generated by the recommendation apparatus and showing a list of content associated with the category information, and
a selection information transmitter configured to accept the selection of content included in the recommendation list, and then transmit, to the recommendation apparatus, information specifying the selected content,
and wherein the recommendation apparatus is provided with
a storage unit configured to store viewing histories indicating the content viewed by the users of a plurality of information processing apparatuses, wherein each viewing history is categorized and stored on the basis of a user ID specifying a particular user as well as category information expressing one or more content categories associated with a recording medium loaded into a particular information processing apparatus,
a specifying unit configured to acquire a particular user ID and category information transmitted from a particular information processing apparatus, and then specifying the viewing histories of other users stored in the storage unit that are associated with the category information, and
a list generator configured to generate, on the basis of the viewing histories specified by the specifying unit, a recommendation list showing a list of content for viewing.
